## Europäisches Patentamt
## European Patent Office
## Office européen des brevets

(19)

(11) Veröffentlichungsnummer: **0 148 294**
**B1**

(12) **EUROPÄISCHE PATENTSCHRIFT**

(45) Veröffentlichungstag der Patentschrift:
16.03.88

(51) Int. Cl.⁴: **G 11 B 3/46**, B 23 B 27/20

(21) Anmeldenummer: **84100115.9**

(22) Anmeldetag: **07.01.84**

(54) Halterung für einen Schneidstichel.

(43) Veröffentlichungstag der Anmeldung:
**17.07.85 Patentblatt 85/29**

(45) Bekanntmachung des Hinweises auf die Patenterteilung:
**16.03.88 Patentblatt 88/11**

(84) Benannte Vertragsstaaten:
**AT BE CH DE FR GB IT LI LU NL SE**

(56) Entgegenhaltungen:
**DE-A-2 319 407**
**DE-A-3 121 167**
**DE-C-584 413**
**DE-C-677 800**
**FR-A-615 836**

**INDUSTRIAL DIAMOND REVIEW, Band 23, Nr. 273,
August 1963, Seiten 188-192, London, GB; Z. SMIDA:
"Diamond tools in precision engineering"**
**IBM TECHNICAL DISCLOSURE BULLETIN, Band 17,
Nr. 10, März 1975, Seite 3009, New York, US; J.
GRANDIA et al.: "Diamond burnishing tool"**

(73) Patentinhaber: **TELDEC Schallplatten GmbH,
Heussweg 25, D-2000 Hamburg 20 (DE)**

(72) Erfinder: **Redlich, Horst, PLassstrasse 31, D-1000
Berlin 37 (DE)**
Erfinder: **Stahlbaum, Heinz, Leonorenstrasse 90,
D-1000 Berlin 46 (DE)**

(74) Vertreter: **Einsel, Robert, Dipl.- Ing.,
Petersburgstrasse 28, D-3100 Celle (DE)**

EP 0 148 294 B1

## Beschreibung

Die Erfindung betrifft eine Halterung für einen Schneidstichel, insbesondere aus Diamant, nach dem Oberbegriff des Anspruchs 1.

Zum Schneiden von Informationen in eine Vorform einer Schallplatte, in die sogenannte Lackfolie, werden meist Schneidstichel mit einem in einer Halterung eingegossenen bzw. eingeklebten Saphir benutzt, die über diese Halterung elektromechanisch erregt werden. Zum gleichen Zweck sind auch Schneidstichel aus Diamant geeignet und bekannt. Für das Schneiden der Information in einen Schneidträger aus Kupfer anstelle einer Lackfolie ist infolge des dem Schneidstichel entgegengesetzten Widerstandes der Schneidschicht die Härte eines Saphirs nicht mehr ausreichend. Dort muß ein Diamantschneidstichel verwendet werden.

Bei bekannten Schneidsticheln werden Saphire bzw. Diamanten in eine rohrförmige Halterung eingesetzt und verklebt bzw. verlötet. Ein abgenutzter Saphir kann durch einen neuen Saphir ersetzt werden. Diamanten werden aus wirtschaftlichen Gründen nach einer vorbestimmten Benutzungszeit neu angeschliffen oder poliert. Dies ist jedoh bei den bekannten Schneidsticheln mit besonderem Aufwand verbunden.

Der Erfindung liegt die Aufgabe zugrunde, einen Schneidstichel anzugeben, der ein einfaches Nachschleife bzw. Polieren ermöglicht.

Diese Aufgabe wird durch die im Anspruch 1 angegebene Erfindung gelöst. Weitergehende Merkmale der Erfindung sind in Unteransprüchen angegeben.

Die erfindungsgemäße Halterung erlaubt das Nachpolieren eines Schneidstichels, ohne ihn aus seiner Halterung zu entnehmen. Durch die besondere anordnung des Diamanten in der Halterung liegt die Brustfläche, das ist die der Schnittrichtung zugewandte, durch die Schnittkante begrenzte Fläche des Diamanten, frei oberhalb der Halterung. Der Diamant braucht daher zum Nachpolieren dieser Brustfläche nicht aus seiner Haltung entfernt zu werden. Durch die besondere Formgebung der Halterung ergibt sich außerdem ein besserer Sitz in der Halterung, als es beim Stand der Technik gegeben ist. Schließlich kann die Halterung sicher in der Lagerung des Schneidstichels befestigt werden. Das ist aber wesentlich für die Schneidtechnik bei Metallen, insbesondere dann, wenn der Schneidstichel während des Schneidens Schwingungen in Ultraschallfrequenz ausführt.

Die Erfindung wird nachstehend an Hand eines Ausführungsbeispiels näher erläutert. Es zeigen

Fig. 1 eine Halterung nach dem Stand der Technik,

Fig. 2 eine erfindungsgemäße Halterung, Fig. 3 eine weitere Ausführungsform,

Fig. 4 einen Schneidkopf mit eingesetzter Halterung,

Fig. 5 eine Weiterbildung der Halterung,

Fig. 6 und Fig. 7 zwei Ansichten der in den Schneidkopf eingesetzten Halterung,

Fig. 8 und Fig. 9 zwei Ansichten einer anderen Ausführungsform von Halterung und Schneidkopf,

Fig. 10 eine Draufsicht auf die Halterung.

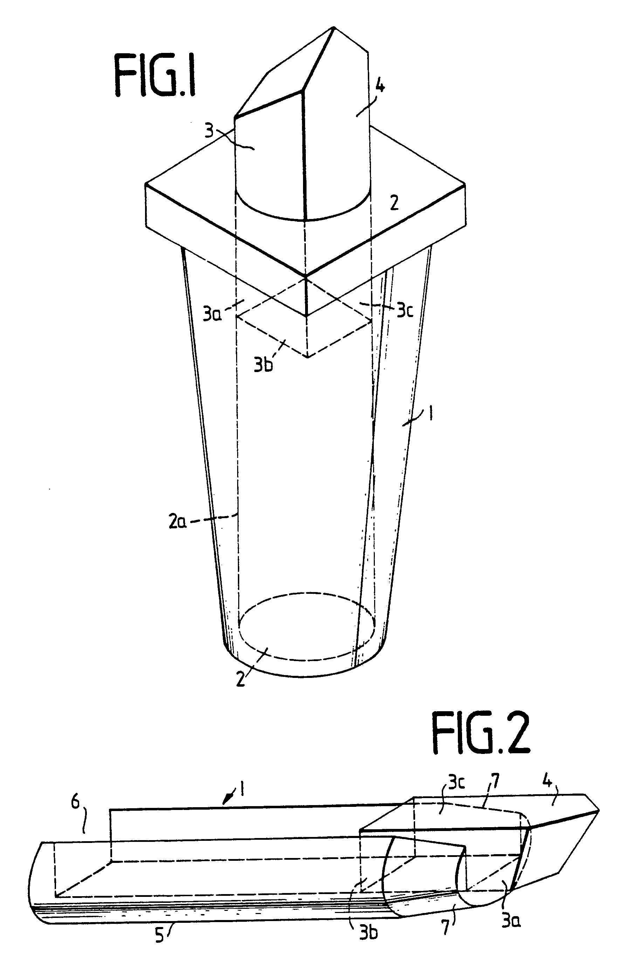

Fig. 1 zeigt eine Halterung, wie die beim Stand der Technik verwendet wird. Die Halterung besteht aus einem konusförmigen Rohr 1, in dessen Bohrung 2 der Schneidstichel 3 eingesetzt ist. Da die Querschnittsfläche eines üblichen Schneidstichels rechteckförmig ist, liegen die vier Kanten 3a, b, c, d des Schneidstichels 3 an der zylindrischen Wandung 2a der Bohrung 2 auf. Wenn die Querschnittsfläche des Diamanten oder Saphires nicht exakt quadratisch ausgebildet ist, können möglicherweise nur drei Kanten an der Wandung 2a anliegen. Es ist auch möglich, daß die Diagonalen des Querschnitts des Schneidstichels 3 kleiner sind als der Durchmesser der Bohrung 2. Damit der Schneidstichel 3 fest in der Bohrung 2 verankert ist, ist es daher notwendig, diesen zu verkleben oder zu verlöten. Der Schneidstichel 3 muß dazu relativ weit in die Bohrung 2 eingeführt werden.

Wenn die sogenannte Standzeit des Schneidstichels erreicht ist, dieser also abgenutzt ist, wird ein abgenutzter Saphir meist entfernt und durch einen neuen Saphir ersetzt. Bei Verwendung eines Diamanten wäre es dagegen wirtschaftlich nicht tragbar, einen abgenutzten Diamanten durch einen neuen zu ersetzen. Diamanten werden daher nachpoliert. Dazu wird der Diamant 3 aus der Halterung 1 entfernt und in einer nicht dargestellten Schleif- oder Polierhalterung an seiner Tafelfläche oder Brust 4 nachpoliert. Diese Brust stellt die Fläche des Diamanten dar, gegen die das zu schneidende Material drückt, an der also der geschnittene Span abrollt. Nach diesem Arbeitsschritt wird der Diamant 3 erneut in die Halterung 1 eingesetzt und kann wieder verwendet werden. Das ist jedoch relativ aufwendig.

Die erfindungsgemäße Anordnung nach Fig. 2 vermeidet diesen Nachteil der bekannten Halterung. Die Halterung 1 besteht nach Fig. 2 im wesentlichen aus einem Stab 5 mit einer Länge von ca. 5 mm, der über seine gesamte Länge mit einer rechteckförmigen Nut 6 versehen ist. In diese Nut ist an einem Ende der rechteckförmig geschliffene Diamant 3 eingesetzt, dessen Maße so zu wählen sind, daß drei Seitenflächen an der Innenfläche der Nut 6 anliegt und mit seiner vierten Fläche, der Brustfläche 4, gerade aus der Nut 6 herausragt. Diese vierte Fläche ist also die Brust 4 des Schneiddiamanten 3. Diese Brust 4 läuft nach vorn hin zur dreieckförmigen Schneidspitze aus. Durch das dichte Anliegen der drei Diamantflächen an den Flächen der Nut 6 wird der Sitz des Diamanten 3 beim Kleben oder Löten sehr viel fester in der Halterung, als es beim Stand der Technik möglich ist. Durch die erhöhte Haltekraft kann zugleich die Länge des in die Nut einzusetzenden Diamanten verkleinert werden.

Zum Nachpolieren des Schneiddiamanten 3 ist es nicht mehr erforderlich, diesen aus der Halterung 1 zu entfernen. Vielmehr wird der Diamant 3 mitsamt seiner Halterung 1 in eine Schleif- oder Polierrichtung eingesetzt und ein Lösen aus der Halerung 1 notwendig ist. Hierdurch ergibt sich ein sehr schnelles Auswechseln, Nachpolieren und Wiedereinsetzen eines Schneidstichels. Das dem Diamanten 3 zugewandte Ende 7 des Haltestabes 1 ist konisch angespitzt, damit ein relativ kleiner Übergang zwischen Halterung 1 und Diamant 3 vorhanden ist. Durch die in Fig.2 dargestellte Art der Halterung 1 wird zugleich erreicht, daß die Flächen 3a, b, c bereits vor dem ersten Einsetzen des Diamanten 3 in die Nut 6 eine genaue Lage relativ zum Kristallgitter, z.B. zu den natürlichen Kanten des eingesetzten Diamanten 3 erhalten, die bekanntlich viel verschleißfester sind als andere durch Schleifen erzielte Kanten. Entsprechend erfolgt aus der Schnitt des Diamanten 3. Beim Polieren einer so aufeinander abgestimmten Einheit Halterung 1 - Nut 6 - Diamant 3 erfolgt dann die Bearbeitung der Brust 4 in Übereinstimmung mit dem natürlichen Kristallgitter, ohne daß dieses selbst noch sichtbar ist, weil die Flächen 3a, b, c, d ihre Lage beibehalten und die Lage der Nut 6 damit ein Maß für die Lage der natürlichen Kanten oder anderer in ihrer Lage vorgegebenen Linien des Kristallgitters ist.

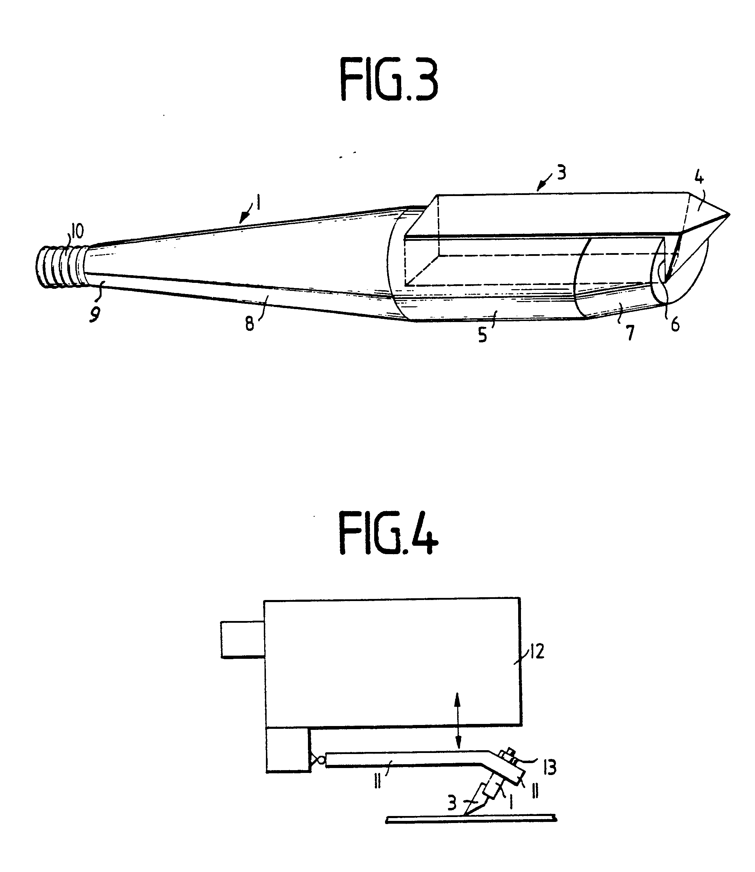

Fig. 3 zeigt eine verbesserte Ausführungsform der in Fig. 2 dargestellten Halterung 1. Hierbei ist in die Halterung 1 nur eine so lange Nut 6 eingefräst, daß der Diamant 3 in der Halterung 1 die gesamte Nut 6 ausfüllt. Die Halterung 1 ist an ihrem dem Diamanten abgewandten Bereich 8 konisch ausgebildet, so daß die Halterung 1 im Schreibkopf gut gehalten wird. Das Ende 9 des Stabes 5 kann mit einem Schraubgewinde 10 versehen sein. Beim Schneiden in Kupfer mit den erhöhten Anforderungen an die Halterung 1 und durch die angewandte Technik (insbesondere die in der deutschen Patentenanmeldung P 31 14 108. 0 beschriebenen Technik) bedingten Vibrationen kann die Halterung 1 dadurch gemäß Fig. 4 elektromagnetisch angetriebenen Hebel 11 des Schreibkopfes 12 leicht eingesetzt und ausgewechselt und mittels einer Mutter 13 befestigt werden.

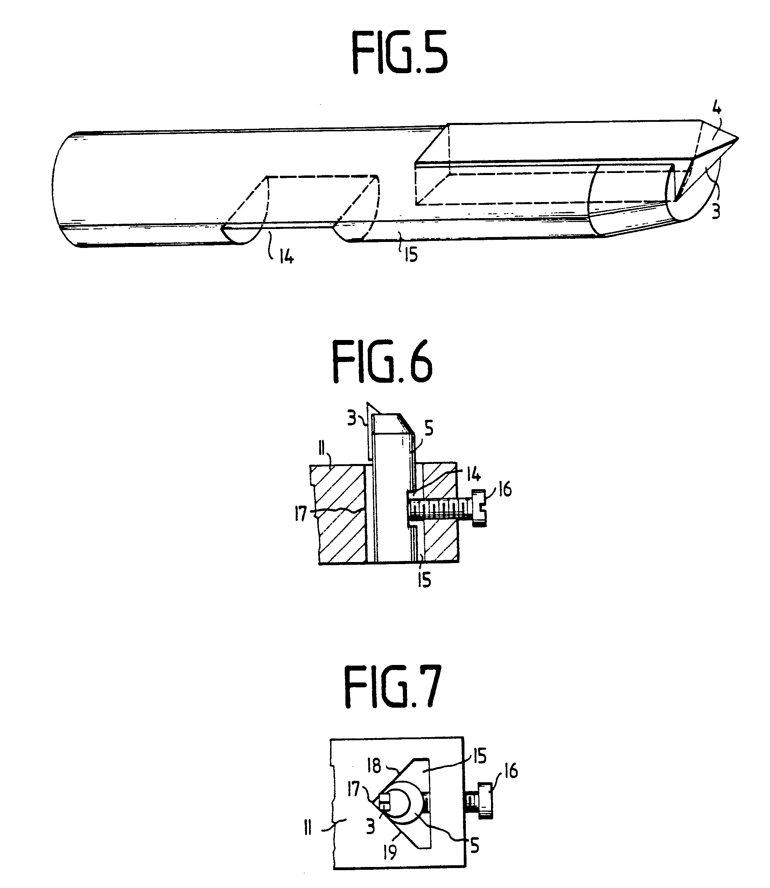

Fig. 5 zeigt eine Weiterbildung der in Fig. 2 dargestellten Halterung, durch die zugleich mit der Befestigung am Schneidkopf eine selbsttätige Justierung des Schneiddiamanten auf die gewünschte Schneidrichtung durchgeführt wird. Der Diamant 3 ist wie in Fig. 2 in die Nut 6 eines Stabes 5 eingesetzt und dort befestigt. Auf der dem Diamanten 3 abgewandten Seite des Stabes 5 ist eine plane Fläche 14 vorgesehen, die parallel zur Tafelfläche 4 (Brust) des Diamanten 3 angeordnet ist. Die Fläche 14 ist relativ zum Diamanten 3 in Richtung des Stabes 5 versetzt. Dadurcn kann sie für die Befestigung am oder im Schneidkopf herangezogen werden, ohne daß der Bereich des Diamanten verringert wird.

Fig. 6 zeigt die in eine Aufnahmeöffnung 15 des Schneidkopfes oder des Hebels 11 eingesetzte Halterung. Die plane Fläche 14 befindet sich innerhalb der Öffnung 15, der Diamant außerhalb. Von außen her kann eine Schraube 16 in die Öffnung gedreht werden, wo sie auf die plane Fläche 14 trifft und den Stab 5 an die gegenüberliegende Wandung der Öffnung 15 drückt und so die Halterung auch bei starken Erschütterungen fest hält.

In Fig. 7 ist die Aufnahmeöffnung 15 im Querschnitt dargestellt. Der Querschnitt ist im wesentlichen dreieckförmig, wobei eine Ecke 17 in die gewünschte Schneidrichtung weist. Die Schraube 16 druckt den Stab 5 gerade in Richtung auf diese Ecke 17. Die beiden angrenzenden Dreieckseiten 18, 19 sind so ausgebildet, daß sich der Stab 5 relativ zu ihnen drehen kann, wenn die Schraube 16 mit ihrer planen Stirnfläche gegen die plane Fläche 14 drückt. Beim Eindrehen der Schraube 16 dreht sich der Stab so lange, bis Stirnfläche der Schraube 16 und plane Flächen 14 ganzflächig aufeinanderliegen. Da die plane Fläche 14 und die Tafelfläche (Brust) 4 des Diamanten 3 ebenfalls parallel liegen, wird bei der Befestigung der Halterung mit der Schraube 16 der Diamant 3 selbständig in die gewünschte Schnittrichtung gedreht. Da bei einem Diamanten die härtesten Kanten in relativ schmalen Zonen liegen (natürliche Kanten), die bei einem geschliffenen Diamanten nicht mehr ohne weiteres erkennbar sind, ist diese automatische Justierung auf die beste Schnittlage von großem Vorteil. Wenn gesagt ist, daß die Öffnung 15 im wesentlichen dreieckförmig bemessen ist, dann soll das bedeuten, daß zwei winklig zueinander stehende Flächen 18, 19 mit einem Teil ihres Bereiches als Widerlager für den Stab dienen und daß eine dritte Seite als Lager für die Schraube 16 dient. Ea ist also nicht erforderlich, daß die Öffnung insgesamt ein übliches Dreieck mit geraden Seiten bildet.

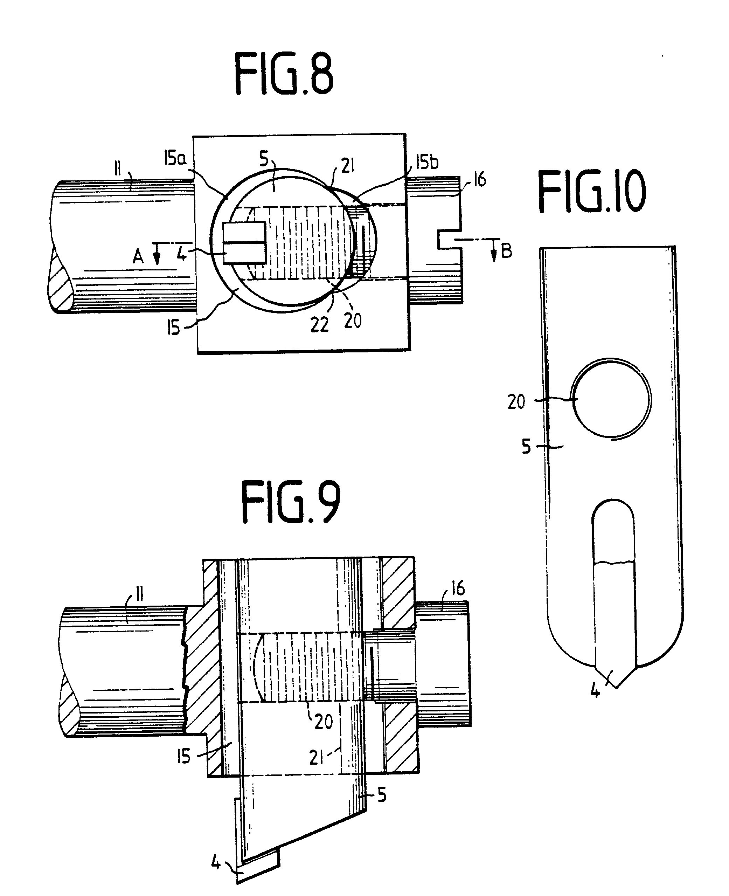

In Fig. 8 ist eine Draufsicht auf eine andere Form der Aufnahmeöffnung 15 des Schneidkopfes 11 mit der eingesetzten Halterung 1 dargestellt. Bei diesem Ausführungsbeispiel ist die Halterung 1 im wesentlichen zylindrisch ausgebildet und mit einer Gewindebohrung 20 senkrecht zur Achse des Stabes 5 versehen. Die ähnlich Fig. 6 von außen in die Aufnahmeöffnung 15 ragende Schraube 16 wird in die Gewindebohrung 20 gedreht und zieht daher den Stab gegen die Innenwandung der Aufnahmeöffnung, an der die Schraube 16 angeordnet ist. Die Aufnahmeöffnung wird durch eine größere 15a und eine kleinere Bohrung 15b gebildet, die sich überlappen, so daß sich zwei Anlagekanten 21, 22 bilden. Bei symmetrischer Anordnung dieser beiden Anlagekanten 21, 22 und symmetrischer Anordnung der Schraube 16 wird die Halterung 1 beim Anziehen der Schraube 16 und damit bei der Befestigung automatisch so eingestellt, daß die optimale Schneidposition erreicht wird. Da der auf den Diamanten 3 beim Schneiden ausgeübte Druck gegen die Anlagekanten gerichtet ist, wird auch bei Vibrationen die Halterung 1 nicht gelockert. Die Durchmesser der Bohrungen 15a, 15b und die Überlappung sind so gewählt, daß der Abstand a der Mittelpunkte größer ist als der halbe Durchmesser der kleineren Bohrung.

Fig. 9 zeigt eine seitliche Schnittdarstellung von Schneidkopf 11 und Halterung 1 sowie Schraube 16.

Fig. 10 zeigt eine Draufsicht auf die in den Fig. 8, 9 eingesetzte Halterung 1.

## Patentansprüche

1. Halterung für einen Schneidstichel zum elektromechanischen Schneiden einer Information in einen Aufzeichnungsträger, dadurch gekennzeichnet, daß die Halterung (1) einen Stab (5) mit einer seitlichen Nut (6) enthält und daß der Schneidstichel (3) sich nur so weit in der Nut (6) befindet, daß die Brustfläche (4) des Schneidstichels (8) gerade noch aus der Nut (6) herausragt.

2. Halterung nach Anspruch 1, dadurch gekennzeichnet, daß das dem Schneidstichel (3) zugekehrte Ende (7) des Stabes (5) verjüngt ist.

3. Halterung nach Anspruch 1 oder 2, dadurch gekennzeichnet, daß das dem Schneidstichel (3) abgewandte Ende (9) des Stabes (5) konusförmig ausgebildet ist.

4. Halterung nach Anspruch 3, dadurch gekennzeichnet, daß das Ende des Konus (9) mit Zylinder- oder Konusgewinde (10) versehen ist.

5. Halterung nach Anspruch 1, dadurch gekennzeichnet, daß der Schneidstichel (3) aus Diamant besteht.

6. Halterung nach Anspruch 1, dadurch gekennzeichnet, daß der Schneidstichel (3) mit den Wandungen der Nut (6) verbunden, insbesondere verklebt oder verlötet ist.

7. Halterung nach einem der Ansprüche 5 - 6, dadurch gekennzeichnet, daß der Diamant (4) so in dem Stab (5) justiert ist, daß die Lage der senkrechten Schnittflächen des Diamanten (3) ein Maß für die nach dem Schleifen unsichtbaren natürlichen Kanten des Diamanten (3) sind.

8. Halterung nach einem der Ansprüche 1 - 7, dadurch gekennzeichnet, daß der Stab (5) auf der der Brustfläche (4) des Schneidstichels gegenüberliegenden Seite mit einer planen Fläche (14) versehen ist, die parallel zur Brustfläche (4) ist.

9. Halterung nach Anspruch 8, dadurch gekennzeichnet, daß die plane Fläche (14) in Richtung des Stabes (5) soweit gegenüber dem Schneidstichel versetzt angeordnet ist, daß bei in dem Schreibkopf oder in eine für die Aufnahme des Stabes (5) vorgesehene Öffnung (15) eingesetzter Stab die plane Fläche (14) zur Befestigung in der Öffnung (15) dienen kann.

10. Halterung nach Anspruch 8 oder 9, dadurch gekennzeichnet, daß die plane Fläche (14) mit einer Schraube (16) zusammenwirkt, die eine im wesentlichen plane Stirnfläche hat.

11. Halterung nach Anspruch 10, dadurch gekennzeichnet, daß die Öffnung (15) einen im wesentlichen dreieckförmigen Querschnitt hat, daß eine Spitze des Dreiecks in die gewünschte Schneidrichtung zeigt, daß von der dieser Spitze des Dreiecks gegenüberliegenden Dreiecksseite die Schraube (16) in die Öffnung (15) ragt und daß der Stab (5) so an den anderen beiden Dreieckseiten anliegt, daß sich der Stab (5) beim Festdrehen der Schraube (16) auf der planen Fläche (14) selbsttätig in die gewünschte Schneidrichtung justiert.

12. Halterung nach einem der Ansprüche 1-7, dadurch gekennzeichnet, daß der Stab (5) eine Bohrung (20) aufweist, deren Achsrichtung senkrecht zur Achsrichtung des Stabes (5) und der Brustfläche liegt.

13. Halterung nach Anspruch 12, dadurch gekennzeichnet, daß die Aufnahmeöffnung (15) aus zwei sich überlappenden Bohrungen (15a, 15b) besteht, daß eine Schraube (16) an der der Schneidseite abgewandten Seite der Aufnahmeöffnung (15) durch die Wandung in die Aufnahmeöffnung (15b) ragt und dort in die Bohrung (16) des Stabes (5) gedreht ist, derart, daß der Stab (5) gegen zwei im Überlappungsbereich der beiden Bohrungen (15a, 15b) gebildete Anlagekanten (21, 22) gezogen ist.

## Claims

1. Mount for a cutting stylus for electromechanically cutting information in a recording medium, characterized in that the mount (1) comprises a bar (5) having a lateral groove (6); and that said stylus (3) being received in said groove (6) such that the leading face (4) of the stylus (8) slightly projects beyond the groove (6).

2. A mount as defined in claim 1, characterized in that the end portion (7) of said bar (5) being tapered towards the stylus (3).

3. A mount as defined in claim 1 or 2, characterized in that the end portion (9) of said bar (5) opposite said stylus (3) being conically shaped.

4. A mount as defined in claim 3, characterized in that the end portion of the cone (9) has a cylindrically or conically shaped thread (10).

5. A mount as defined in claim 1, characterized in that said stylus (3) is a diamond stylus.

6. A mount as defined in claim 1, characterized in that said stylus (3) is fixed to the wall surfaces of the groove (6), particularly adhered or bonded.

7. A mount as defined in claim 5 or 6, characterized in that said diamond (4) is so oriented with respect to said bar (5) that the position of perpendicular cutting planes of said diamond (3) constitute a measure for the position of natural edges of said diamond; said natural edges being invisible subsequent to diamond (3) grinding.

8. A mount as defined in one of claims 1 - 7, characterized in that said bar (5) has a planar surface portion (14) on a side oriented away from said leading face (4) of said diamond (3); said planar surface portion extending parallel to said leading face.

9. A mount as defined in claim 8, characterized in that said planar surface portion (14) is staggered with respect to said stylus in a direction parallel to the length dimension of the bar (5) such that the planar surface portion (14) can be used for fastening the bar within a socket opening (15) of the cutting head receiving said bar.

10. A mount as defined in claim 9, characterized in that the planar surface portion (14) cooperates with a setscrew (16) having a planar leading surface.

11. A mount as defined in claim 10, characterized in that said socket opening (15) has a substantially triangular cross-sectional shape; said triangle having a point oriented in a desired cutting direction; said triangle having a first side opposite said point; said setscrew (16) extending into said socket opening (15) through said first side; said triangle further having second and third sides engaging said bar (5) such that the bar (5) automatically adjusts into the desired cutting direction when the setscrew (16) is fastened to the planar surface (14).

12. A mount as defined in one of the claims 1 - 7, characterized in that said bar (5) has a bore (10) extending perpendicularly to said length dimension of said bar (5) and said leading face of said stylus.

13. A mount as defined in claim 12, characterized in that the said socket opening (15) being formed of two overlapping bores (15a, 15b) defining two parallel engagement edges (21, 22) within said socket opening (15a,15b) receiving said bar (5), and a setscrew (16) supported in the walls of the socket opening (15) and projecting into said socket opening (15) in a direction coinciding with the said cutting direction; said setscrew (16) engaging into a thread of said bore (16) of said bar (5); said setscrew (16) pulls said bar (5) into contact with said engagement edges (21, 22).

**Revendications**

1. Monture pour un burin de gravure destiné à la gravure électromécanique d'une information sur un support d'enregistrement, caractérisée en ce que la monture (1) comprend une tige (5) munie d'une rainure latérale (6) et en ce que le burin de gravure (3) n'est engagé dans la rainure (6) que sur une profondeur telle que la face d'attaque (4) du burin de gravure (8) fasse légèrement saillie en dehors de la rainure (6).

2. Monture selon la revendication 1, caractérisée en ce que l'extrémité (7) de la tige (5) qui est dirigée vers le burin de gravure (3) est rétrécie.

3. Monture selon la revendication 1 ou la revendication 2, caractérisée en ce que l'extrémité (9) de la tige (5) qui ist à l'opposé du burin de gravure (3) est en forme de cône.

4. Monture selon la revendication 3, caractérisée en ce que l'extrémité du cône (9) est munie d'un filetage cylindrique ou conique (10).

5. Monture selon la revendication 1, caractérisée en ce que le burin de gravure (3) est en diamant.

6. Monture selon la revendication 1, caractérisée en ce que le burin de gravure (3) est fixé, en particulier collé ou brasé, aux parois de la rainure (6).

7. Monture selon une des revendications 5-6, caractérisée en ce que le diamant (4) est ajusté dans la tige (5) de manière que la position des surfaces de coupe perpendiculaires du diamant (3) soit un repère pour les arêtes naturelles du diamant (3), qui sont invisibles après le meulage.

8. Monture selon une des revendications 1 à 7, caractérisée en ce que, sur le côté qui est à l'opposé de la face d'attaque (4) du burin de gravure, la tige (5) est munie d'une surface plane (14) qui est parallèle à la face d'attaque (4).

9. Monture selon la revendication 8, caractérisée en ce que la surface plane (14) ist décalée suffisamment loin par rapport au burin de gravure dans le sens de la tige (5) pour que, lorsque la tige est montée dans la tête de gravure ou dans une ouverture (15) prévue pour recevoir la tige (5), la surface plane (14) puisse servir pour la fixation dans l'ouverture (15).

10. Monture selon la revendication 8 ou 9, caractérisée en ce que la surface plane (14) coopère avec une vis (16) qui présente une surface frontale sensiblement plane.

11. Monture selon la revendication 10, caractérisée en ce que l'ouverture (15) présente une section sensiblement triangulaire, en ce qu'une pointe du triangle pointe dans la direction de la coupe désirée, en ce que la vis (16) fait saillie dans l'ouverture (15) en partant du côté du triangle qui est à l'opposé de la pointe du triangle, et en ce que la tige (5) est en appui contre les deux autres côtés du triangle de telle manière que, lorsqu'on serre la vis (16) sur la surface plane (14), la tige (5) s'ajuste automatiquement dans la direction de coupe voulue.

12. Monture selon une des revendications 1 à 7, caractérisée en ce que la tige (5) présente un perçage (20) dont la direction de l'axe est perpendiculaire à la direction de l'axe de la tige (5) et à la face d'attaque.

13. Monture selon la revendication 12, caractérisée en ce que l'ouverture réceptrice (15) est composée de deux perçages (15a, 15b) qui se recoupent, en ce qu'une vis (16) fait saillie dans l'ouverture réceptrice (15b) à travers la paroi, sur le côté de l'ouverture réceptrice (15) qui est à l'opposé de la face de coupe, et là, est vissée dans le perçage (16) de la tige (5) de telle manière que la tige (5) soit attirée contre deux arêtes d'appui (21, 22) formées dans la région d'intersection des deux perçages (15a, 15b).

0 148 294

FIG.1

FIG.2

1

# FIG.3

# FIG.4

## FIG.5

## FIG.6

## FIG.7

5

# FIG.8

# FIG.10

# FIG.9